# EUROPÄISCHE PATENTSCHRIFT

(11) **EP 2 480 485 B1**
(45) Veröffentlichungstag und Bekanntmachung des Hinweises auf die Patenterteilung: **05.12.2018**
(21) Anmeldenummer: 10763603.7
(22) Anmeldetag: 22.09.2010
(51) Int. Cl.: B66C 19/00, B60K 7/00, B66C 9/14, B60T 1/06, F16D 55/02

(54) **PORTALHUBWAGEN MIT RADANTRIEBSEINHEIT**
STRADDLE CARRIER COMPRISING WHEEL DRIVE UNIT
CHARIOT CAVALIER À UNITÉ D'ENTRAÎNEMENT DE ROUE

(30) Priorität: 24.09.2009 DE 102009042856
(43) Veröffentlichungstag der Anmeldung: 01.08.2012
(73) Patentinhaber: Pfenning Elektroanlagen GmbH, 97199 Ochsenfurt (DE)
(72) Erfinder: GIESE, Peter, 91074 Herzogenaurach (DE); GAYER, Torsten, 26919 Brake (DE)
(74) Vertreter: Lelgemann, Karl-Heinz
(86) Internationale Anmeldenummer: PCT/EP2010/005783
(87) Internationale Veröffentlichungsnummer: WO 2011/035891

(56) Entgegenhaltungen:
- EP-A1- 1 506 888
- DE-A1- 1 580 258
- DE-A1- 2 460 519
- DE-A1- 10 361 371
- GB-A- 2 345 586
- US-A- 4 330 045
- US-A- 4 799 564
- US-A1- 2001 030 400

## Beschreibung

Die Erfindung bezieht sich auf einen Portalhubwagen (Straddle Carrier, SC) zum Einsatz in Containerterminals und für allgemeine Transportzwecke, mit einem Rahmengestell, einem Lastaufnahmemittel, vorzugsweise einem Spreader oder Toppspreader, das zwischen dem Rahmengestell hängt und mit einer Last, vorzugsweise einem Container, verriegelbar ist, Hubwinden, mittels denen das Lastaufnahmemittel vertikal bewegbar ist, und Fahrwerken, die am unteren Bereich des Rahmengestells angeordnet sind und jeweils eine Vielzahl in Reihe angeordneter Räder aufweisen, denen jeweils eine Radantriebseinheit mit einem Motor, einem Getriebe und einer Bremsvorrichtung zugeordnet ist. Ein solcher Portalhubwagen ist z.B. aus DE2460519 Al bekannt.

Derartige Portalhubwagen bzw. Straddle Carrier kommen in großer Zahl z.B. in Containerterminals zum Einsatz, um Container zwischen unterschiedlichen Abschnitten des Containerterminals zu transportieren und in geordneter Weise zu lagern.

Im Betrieb erreichen derartige Portalhubwagen vergleichsweise große Geschwindigkeiten, die insbesondere bei Lastfahrten zur Folge haben, dass bei Anhalte- bzw. Bremsvorgängen hohe Bremsmomente ausgeübt werden müssen. Dies hat eine entsprechende Auslegung der Bremsvorrichtungen an den Radantriebseinheiten zur Folge, mit dem damit einhergehenden technisch-konstruktiven und wirtschaftlichen Aufwand.

Ausgehend von dem vorstehend geschilderten Stand der Technik liegt der Erfindung die Aufgabe zugrunde, einen Portalhubwagen zum Einsatz in Containerterminals und für allgemeine Transportzwecke zu schaffen, dessen Radantriebseinheiten ohne Vergrößerung des technisch-konstruktiven Aufwands und bei zumindest gleicher Betriebssicherheit in weitaus höherem Ausmaß als beim bekannten Stand der Technik aus in Großserien hergestellten Standardbauteilen aufgebaut sind.

Diese Aufgabe wird erfindungsgemäß dadurch gelöst, dass die Bremsvorrichtung jeder Radantriebseinheit des Portalhubwagens in Bezug auf das Getriebe der Radantriebseinheit auf dessen schnell drehender Seite angeordnet ist. Durch die erfindungsgemäße Anordnung der Bremsvorrichtung ergibt sich der grundsätzliche Vorteil, dass die von der Bremsvorrichtung aufzubringenden Bremsmomente vergleichsweise gering sind. Bei der Auslegung der für die Betriebssicherheit des Portalhubwagens wichtigen Bremsvorrichtungen kann daher ein im Vergleich zu aus dem Stand der Technik bekannten Portalhubwagen erheblich niedrigeres Bremsmoment zugrunde gelegt werden.

Vorteilhaft ist die Bremsvorrichtung jeder Radantriebseinheit elektro-hydraulisch angetrieben.

Denkbar ist jedoch auch, dass die Bremsvorrichtung jeder Antriebseinheit ausschließlich elektrisch angetrieben wird.

In besonders vorteilhafter und mit einem vergleichsweise geringen wirtschaftlichen Aufwand einhergehender Weise lassen sich die Radantriebseinheiten des erfindungsgemäßen Portalhubwagens realisieren, wenn die Bremsvorrichtung jeder Radantriebseinheit als luftgekühlte Scheibenbremse mit einer vorzugsweise in einer Fahrzeug-Großserie herstellbaren Bremsscheibe mit Innenbelüftung ausgebildet ist. Derartige Bauteile für Bremsvorrichtungen werden in sehr hohen Stückzahlen in der Kraftfahrzeugindustrie hergestellt und stehen daher in großer Anzahl und im Vergleich zu aus dem Stand der Technik bekannten entsprechenden Bauteilen zu einem niedrigen Preis zur Verfügung. Hinsichtlich der Ersatzteillogistik, des Aufwands für Ersatzteile etc. ergeben sich somit erhebliche Erleichterungen.

Gemäß einer vorteilhaften Ausführungsform weist die Bremsvorrichtung jeder Antriebseinheit vorzugsweise zwei vorzugsweise in einer Fahrzeug-Großserie herstellbare Bremssättel auf. Durch den Einsatz zweier Bremssättel je Bremsscheibe wird für die Bremsvorrichtung der Radantriebseinheit des erfindungsgemäßen Portalhubwagens quasi Redundanz geschaffen, wobei darüber hinaus der Bremsbelagverschleiß reduziert wird. Sofern ein Bremssattel bzw. der diesem zugeordnete Bremskreis ausfällt, steht der intakte Bremssattel bzw. der diesem zugeordnete Bremskreis nach wie vor zur Verfügung, um die volle Bremsleistung zu erbringen.

Vorteilhaft ist die Bremsvorrichtung jeder Radantriebseinheit in einem die Radantriebseinheit mit dem Rad halternden Radträger angeordnet, der in geschlossener Kastenbauweise ausgebildet ist. Hierdurch ergibt sich für den Radträger eine sehr hohe Torsionssteifigkeit bei gleichzeitig geringem Gewicht.

Um eine Notbremsfunktion in jedem Fall zur Verfügung zu stellen, ist es zweckmäßig, wenn in die Bremssättel der Bremsvorrichtung jeder Antriebseinheit jeweils eine elektrische Haltebremse integriert ist.

Diese elektrische Haltebremse ist vorteilhaft mittels eines elektrischen Energiespeichers, vorzugsweise einer Batterie, mit elektrischer Energie versorgbar, so dass auch bei Ausfall der elektrischen Versorgung die Festhaltefunktion bzw. Notbremsungen durch ein Feststellteil der elektrischen Haltebremse realisiert werden können.

Alternativ kann die in die Bremssättel der Bremsvorrichtung jeder Antriebseinheit integrierte Haltebremse auch als hydraulische oder pneumatische Haltebremse ausgebildet sein.

Wenn die Bremssättel der Bremsvorrichtung jeder Antriebseinheit von einem Hydraulikaggregat über einen Druckspeicher mittels Proportionaldruckventilen angesteuert mit Bremsflüssigkeit versorgbar sind, kann im Normalbetrieb die Bremsfunktion exakt realisiert werden. Für den Fall, dass das Hydraulikaggregat bzw. die komplette Energieversorgung des Portalhubwagens ausfällt, können aus dem Druckspeicher beispielsweise noch zehn Bremsvorgänge mit voller Leistung erfolgen.

Wenn ein die Bremskraft der Bremsvorrichtungen der Antriebseinheiten erzeugendes Bremspedal als elektrisches Bremspedal mit Bremskraftsimulator ausgebildet ist, hat eine Bedienungsperson des Portalhubwagens dasselbe Pedalgefühl wie im Falle eines hydraulischen Bremspedals mit Unterdruckverstärkung oder wie bei einem pneumatischen NFZ-System.

Um die Fahr- bzw. Betriebssicherheit des Portalhubwagens weiter zu erhöhen, ist es zweckmäßig, wenn in eine das Bremspedal und die den Radantriebseinheiten zugeordneten Bremsvorrichtungen aufweisende Bremsanlage des Portalhubwagens eine ABS/EPS-Funktionseinheit integriert ist.

Gemäß einer vorteilhaften Ausführungsform des erfindungsgemäßen Portalhubwagens ist der Motor jeder Radantriebseinheit als Antrieb mit hohen Drehmomenten und kleinen Drehzahlen, vorzugsweise als elektrischer Torquemotor, ausgebildet. Ein Torquemotor verfügt bei einer vergleichsweise niedrigen Drehzahl über ein relativ hohes Moment und kann somit den im Betrieb eines Portalhubwagens gestellten technischen Anforderungen in hervorragender Weise genügen. Darüber hinaus verfügt ein derartiger Torquemotor über einen hohen Wirkungsgrad, mit der Folge, dass Abwärme nur in einem vergleichsweise geringen Ausmaß anfällt.

Zweckmäßigerweise weist der elektrische Torquemotor jeder Radantriebseinheit einen Drehzahlbereich von 0 bis ca. 1500 U/min auf, womit er dem im Betrieb von Portalhubwagen gestellten Anforderungsprofil in hervorragender Weise genügt.

Eine besonders vorteilhafte Ausführungsform des erfindungsgemäßen Portalhubwagens ist erreichbar, wenn der elektrische Torquemotor jeder Radantriebseinheit zwangskühlungsfrei ausgebildet und an seinem Motordeckel durch die Innenbelüftung der Bremsscheibe der Bremsvorrichtung kühlbar ist. Irgendwelche weiteren Maßnahmen zur Kühlung des elektrischen Torquemotors sind aufgrund des hohen Wirkungsgrads desselben dann nicht erforderlich.

Darüber hinaus kann der elektrische Torquemotor jeder Radantriebseinheit des erfindungsgemäßen Portalhubwagens winkelsensorfrei ausgebildet sein.

Eine besonders vorteilhafte Ausführungsform der Radantriebseinheit des erfindungsgemäßen Portalhubwagens wird realisiert, wenn ein den Motor aufnehmendes Gehäuse ein vorzugsweise angegossenes Achsrohr für das Getriebe der Radantriebseinheit aufweist.

Das Getriebe jeder Radantriebseinheit des erfindungsgemäßen Portalhubwagens ist vorteilhaft als einstufiges Getriebe mit einem Übersetzungsverhältnis von i = 4 bis 8 ohne Zwangskühlung ausgebildet. Aufgrund der einstufigen Ausbildung lassen sich Spielverluste und dergleichen beträchtlich reduzieren.

Eine besonders vorteilhafte Ausgestaltung ergibt sich, wenn das Getriebe als Planetenradgetriebe ausgebildet ist.

Zur Schadenserfassung kann das Getriebe jeder Radantriebsvorrichtung des erfindungsgemäßen Portalhubwagens einen Schwingungssensor aufweisen.

Im Folgenden wird die Erfindung anhand einer Ausführungsform unter Bezugnahme auf die Zeichnung näher erläutert.

Es zeigen:
- Figur 1: eine Prinzipdarstellung eines erfindungsgemäßen Portalhubwagens (Straddle Carrier);
- Figur 2: eine Prinzipdarstellung einer Ausführungsform einer Radantriebseinheit des in Figur 1 gezeigten erfindungsgemäßen Portalhubwagens; und
- Figur 3: eine Vorderansicht einer Bremsvorrichtung der in Figur 2 gezeigten Radantriebseinheit.

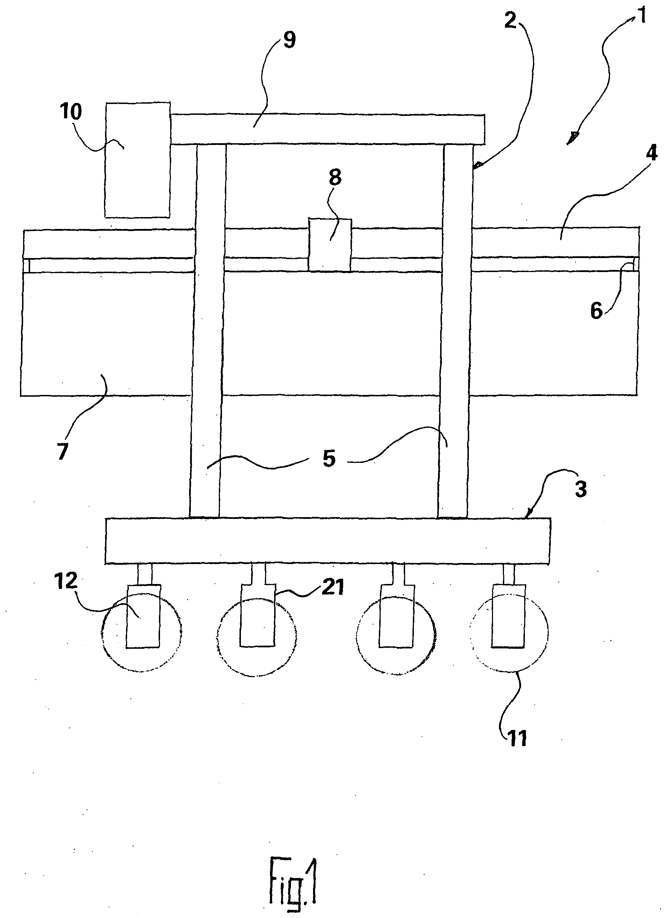

Eine anhand der Figuren 1 bis 3 im Folgenden erläuterte Ausführungsform eines erfindungsgemäßen Portalhubwagens (Straddle Carrier) 1 hat ein Rahmengestell 2, welches nach Art eines Portals zwei am unteren Ende des Rahmengestells 2 angeordnete Fahrwerke 3, von denen in Figur 1 nur eines sichtbar ist, miteinander verbindet.

Zu dem Portalhubwagen 1 gehört ein Lastaufnahmemittel (Spreader, Toppspreader) 4, das zwischen den beiden Fahrwerken 3 zugeordneten Stützen 5 des Rahmengestells 2 angeordnet ist. Das Lastaufnahmemittel 4 ist durch geeignete Verbindungsmittel 6 mit einem Container 7 verbind- bzw. verriegelbar. Das Lastaufnahmemittel 4 ist mittels einer in der in Figur 1 gezeigten Ausführungsform am Lastaufnahmemittel 4 angeordneten Hubwinde 8 zwischen den Stützen 5 des Rahmengestells 2 vertikal bewegbar.

An einem Oberrahmen 9 des Rahmengestells 2 ist eine Fahrerkabine vorgesehen, aus der heraus eine Bedienungsperson des Portalhubwagens 1 diesen und seine Lastaufnahmemittel 4 fahren bzw. steuern kann.

Die beiden Fahrwerke 3 des Portalhubwagens 1, von denen in Figur 1, wie bereits erwähnt, nur eines sichtbar ist, haben in der dargestellten Ausführungsform des Portalhubwagens 1 vier Räder 11, denen jeweils eine am Fahrwerk 3 gehalterte Radantriebseinheit 12 zugeordnet ist.

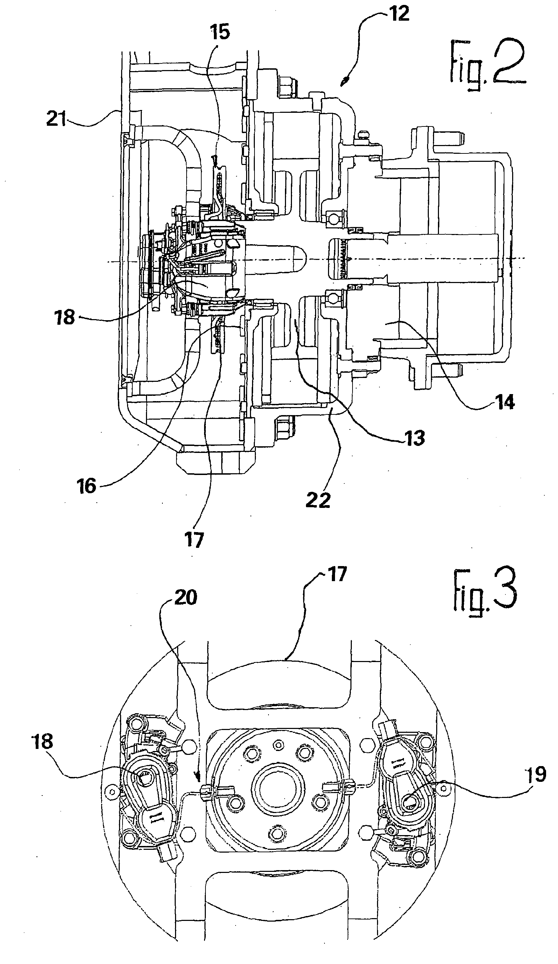

Diese Radantriebseinheit 12 hat, wie am besten aus Figur 2 hervorgeht, einen bei der dort gezeigten Ausführungsform als elektrischen Torquemotor 13 ausgebildeten Motor, ein zwischen dem elektrischen Torquemotor 13 und dem Rad 11 angeordnetes, in der gezeigten Ausführungsform als Planetenradgetriebe 14 ausgebildetes Getriebe und eine in der gezeigten Ausführungsform als luftgekühlte Scheibenbremse 15 ausgebildete Bremsvorrichtung, die auf der dem Planetenradgetriebe 14 abgewandten Seite des elektrischen Torquemotors 13 sitzt.

Das in Figur 2 nicht gezeigte Rad 11 ist in geeigneter Weise mit dem Planetenradgetriebe 14 verbunden.

Aus der in Figur 2 gezeigten Anordnung von elektrischem Torquemotor 13, Planetenradgetriebe 14 und luftgekühlter Scheibenbremse 15 geht hervor, dass sich die luftgekühlte Scheibenbremse 15 bezüglich des Planetenradgetriebes 14 auf dessen schnell drehender Seite befindet. Da sich die luftgekühlte Scheibenbremse 15 somit auf der schnellen Antriebsseite befindet, auf der lediglich kleine Bremsmomente erforderlich sind, kann die luftgekühlte Scheibenbremse 15 aus Standardbauteilen, die in Großserien der Fahrzeugindustrie herstellbar sind, zusammengesetzt werden.

Der elektrische Torquemotor 13 hat einen Drehzahlbereich von 0 bis 1500 U/min und damit einen vergleichsweise niedrigen Betriebsdrehzahlbereich, mit dem ein vergleichsweise hohes Moment einhergeht. Ein derartiger elektrischer Torquemotor hat einen hohen Wirkungsgrad und ist ohne Zwangskühlung und ohne Winkelsensor realisiert.

An seiner der luftgekühlten Scheibenbremse 15 zugewandten Seite ist der Motor mittels eines Motordeckels 16 geschlossen, wobei die Belüftung der luftgekühlten Scheibenbremse 15 als Kühlung für diesen Motordeckel 16 dient.

Das auf der dem Motordeckel 16 bzw. der luftgekühlten Scheibenbremse 15 abgewandten Seite des elektrischen Torquemotors 13 angeordnete Planetenradgetriebe 14 ist als einstufiges Getriebe mit einem Übersetzungsverhältnis von i = 4 bis 8 ohne Zwangskühlung ausgebildet. Aufgrund der einstufigen Ausgestaltung des Planetenradgetriebes 14 hat dieses einen technisch-konstruktiv vergleichsweise einfachen Aufbau, wobei eine Übertragung der mittels des elektrischen Torquemotors erzeugten Antriebsenergie auf das dem Planetenradgetriebe 14 nachgeschaltete Rad 11 nahezu ohne Verluste stattfiindet.

Das Planetenradgetriebe 14 ist mit einem Schwingungssensor ausgerüstet, mittels dem im Betrieb auftretende Schäden etc. erfassbar sind.

Zu der aus üblichen PKW-Standardbauteilen ausgebildeten luftgekühlten Scheibenbremse 15, die im Falle der in den Figuren gezeigten Ausführungsform elektro-hydraulisch angetrieben wird, gehören eine Bremsscheibe 17 und zwei Bremssättel 18, 19. Hierbei handelt es sich um übliche PKW-Bremsscheiben und übliche PKW-Bremssättel.

Der Bremsscheibe 17 sind die beiden Bremssättel 18, 19 zugeordnet. Hierdurch wird mittels Redundanz die Betriebssicherheit der luftgekühlten Scheibenbremse 15 erhöht und darüber hinaus kann der Bremsbelagverschleiß reduziert werden. Sofern ein Bremskreis ausfällt, kann mittels des noch intakten Bremskreises die volle Bremsleistung erbracht werden.

In jeden Bremssattel 18, 19 ist eine elektrische Haltebremse 20 integriert. Diese ist für die Festhalte- bzw. Notbremsfunktion bestimmt.

Die Versorgung der Bremssättel 18, 19 mit Druckfluid bzw. Bremsflüssigkeit erfolgt über ein in den Figuren nicht gezeigtes entsprechendes Hydraulikaggregat, dem ein Druckspeicher zugeordnet ist und das die Bremssättel 18, 19 mittels Proportionaldruckventilen ansteuert. Der in den Figuren ebenfalls nicht dargestellte Druckspeicher ist hinsichtlich seiner Kapazität so ausgelegt, dass bei einem Ausfall des Hydraulikaggregats bzw. bei einem Ausfall der Energieversorgung insgesamt aus dem Druckspeicher heraus noch zehn Bremsvorgänge mit voller Leistung erfolgen können.

Den in die Bremssättel 18, 19 integrierten elektrischen Haltebremsen 20 ist ein in den Figuren nicht gezeigter elektrischer Energiespeicher, z.B. eine Batterie, zugeordnet, der in jedem Fall Notbremsungen mittels eines elektrischen Feststellteils der elektrischen Haltebremse 20 bzw. der luftgekühlten Scheibenbremse 15, in die die elektrische Haltebremse 20 integriert ist, sicherstellt.

Die Bremskraft zum Betrieb der luftgekühlten Scheibenbremse 15 wird über ein in der Fahrerkabine angeordnetes elektrisches Bremspedal erzeugt, das einen Bremskraftsimulator beinhaltet. Aufgrund des Bremskraftsimulators hat die Bedienungsperson dasselbe Pedalgefühl wie im Falle eines üblichen hydraulischen Bremspedals mit Unterdruckverstärkung oder wie im Falle eines pneumatischen NFZ-Systems.

Die Bremsanlage des Portalhubwagens 1 kann zur Erhöhung der Fahrsicherheit noch mit einer ABS/EPS-Funktionseinheit ausgerüstet sein.

Die Radantriebseinheit 12 ist mittels eines in geschlossener Kastenbauweise ausgebildeten Radträgers 21 mit dem Fahrwerk 3 verbunden, in dessen Innerem die luftgekühlte Scheibenbremse angeordnet ist und an dem im gezeigten Ausführungsbeispiel der elektrische Torquemotor 13 bzw. dessen Gehäuse 22 angebracht ist. Der Radträger 21 verfügt aufgrund seiner geschlossenen Kastenbauweise bei einem vergleichsweise geringen Gewicht über eine sehr hohe Torsionssteifigkeit.

## Patentansprüche

1. Portalhubwagen zum Einsatz in Containerterminals und für allgemeine Transportzwecke, mit einem Rahmengestell (2), einem Lastaufnahmemittel (4), vorzugsweise einem Spreader oder Toppspreader, das zwischen dem Rahmengestell (2) hängt und mit einer Last, vorzugsweise einem Container (7), verriegelbar ist, Hubwinden (8), mittels denen das Lastaufnahmemittel (4) vertikal bewegbar ist, und Fahrwerken (3), die am unteren Bereich des Rahmengestells (2) angeordnet sind und jeweils eine Vielzahl in einer Reihe angeordneter Räder (11) aufweisen, denen jeweils eine Radantriebseinheit (12) mit einem Motor (13), einem Getriebe (14) und einer Bremsvorrichtung (15) zugeordnet ist, **dadurch gekennzeichnet, dass** die Bremsvorrichtung (15) jeder Radantriebseinheit (12) in Bezug auf das Getriebe (14) derselben auf dessen schnell drehender Seite angeordnet ist.

2. Portalhubwagen nach Anspruch 1, bei dem die Bremsvorrichtung (15) jeder Radantriebseinheit (12) elektro-hydraulisch angetrieben ist.

3. Portalhubwagen nach Anspruch 1, bei dem die Bremsvorrichtung jeder Radantriebseinheit (12) elektrisch angetrieben ist.

4. Portalhubwagen nach einem der Ansprüche 1 bis 3, bei dem die Bremsvorrichtung (15) jeder Radantriebseinheit (12) als luftgekühlte Scheibenbremse (15) mit einer vorzugsweise in einer Fahrzeug-Großserie herstellbaren Bremsscheibe (17) mit Innenbelüftung ausgebildet ist.

5. Portalhubwagen nach einem der Ansprüche 1 bis 4, bei dem die Bremsvorrichtung (15) jeder Radantriebseinheit (12) vorzugsweise zwei vorzugsweise in einer Fahrzeug-Großserie herstellbare Bremssättel (18, 19) aufweist.

6. Portalhubwagen nach einem der Ansprüche 1 bis 5, bei dem die Bremsvorrichtung (15) jeder Radantriebseinheit (12) in einem die Radantriebseinheit (12) mit dem Rad (11) halternden Radträger (21) angeordnet ist, der in geschlossener Kastenbauweise ausgebildet ist.

7. Portalhubwagen nach Anspruch 5 oder 6, bei dem in den Bremssätteln (18, 19) der Bremsvorrichtung (15) jeder Radantriebseinheit (12) jeweils eine elektrische Haltebremse (20) integriert ist.

8. Portalhubwagen nach Anspruch 7, bei dem die elektrischen Haltebremsen (20) mittels eines elektrischen Energiespeichers, vorzugsweise einer Batterie, mit elektrischer Energie versorgbar sind.

9. Portalhubwagen nach Anspruch 5 oder 6, bei dem in den Bremssätteln (18, 19) der Bremsvorrichtung (15) jede Radantriebseinheit (12) jeweils eine hydraulische Haltebremse integriert ist.

10. Portalhubwagen nach Anspruch 5 oder 6, bei dem in den Bremssätteln (18, 19) der Bremsvorrichtung (15) jeder Radantriebseinheit (12) jeweils eine pneumatische Haltebremse integriert ist.

11. Portalhubwagen nach einem der Ansprüche 5 bis 10, bei dem die Bremssättel (18, 19) der Bremsvorrichtung (15) jeder Radantriebseinheit (12) von einem Hydraulikaggregat über einen Druckspeicher mittels Proportionaldruckventilen angesteuert mit Bremsflüssigkeit versorgbar sind.

12. Portalhubwagen nach einem der Ansprüche 1 bis 11, bei dem ein die Bremskraft der Bremsvorrichtungen (15) der Radantriebseinheiten (12) erzeugendes Bremspedal als elektrisches Bremspedal mit Bremskraftsimulator ausgebildet ist.

13. Portalhubwagen nach Anspruch 12, bei dem in eine das Bremspedal und die den Radantriebseinheiten (12) zugeordneten Bremsvorrichtungen (15) aufweisende Bremsanlage eine ABS/EPS-Funktionseinheit integriert ist.

14. Portalhubwagen nach einem der Ansprüche 1 bis 13, bei dem der Motor (13) jeder Radantriebseinheit (12) als Antrieb (13) mit hohen Drehmomenten und kleinen Drehzahlen ausgebildet ist.

15. Portalhubwagen nach Anspruch 14, bei dem der Motor (13) jeder Radantriebseinheit (12) als elektrischer Torquemotor (13) ausgebildet ist.

16. Portalhubwagen nach Anspruch 15, bei dem der elektrische Torquemotor (13) jeder Radantriebseinheit (12) einen Drehzahlbereich von 0 bis ca. 1500 U/min aufweist.

17. Portalhubwagen nach Anspruch 15 oder 16, bei dem der elektrische Torquemotor (13) jeder Radantriebseinheit (12) zwangskühlungsfrei ausgebildet und an seinem Motordeckel (16) durch die Innenbelüftung der Bremsscheibe (17) der Bremsvorrichtung (15) kühlbar ist.

18. Portalhubwagen nach einem der Ansprüche 15 bis 17, bei dem der elektrische Torquemotor (13) jeder Radantriebseinheit (12) winkelsensorfrei ausgebildet ist.

19. Portalhubwagen nach einem der Ansprüche 1 bis 18, bei dem ein den Motor (13) aufnehmendes Gehäuse ein vorzugsweise angegossenes Achsrohr für das Getriebe (14) der Radantriebseinheit (12) aufweist.

20. Portalhubwagen nach einem der Ansprüche 1 bis 19, bei dem das Getriebe (14) jeder Radantriebseinheit (12) als einstufiges Getriebe mit einem Übersetzungsverhältnis von i = 4 bis 8 ohne Zwangskühlung ausgebildet ist.

21. Portalhubwagen nach einem der Ansprüche 1 bis 20, bei dem das Getriebe (14) als Planetenradgetriebe (14) ausgebildet ist.

22. Portalhubwagen nach einem der Ansprüche 1 bis 21, bei dem das Getriebe (14) einen Schwingungssensor zur Schadenserfassung aufweist.

## Claims

1. A straddle carrier for use in container terminals and for general transportation purposes, with a frame (2), a load-receiving means (4), preferentially a spreader or top spreader, which hangs between the frame (2) and can be locked to a load, preferentially a container (7), hoisting winches (8), by means of which the load-receiving means (4) can be vertically moved, and chassis (3), which are arranged on the lower region of the frame (2) and each comprise a plurality of wheels (11) arranged in a row, each of which is associated with wheel driving unit (12) with a motor (13), a transmission (14) and a braking device (15), **characterized in that** the braking device (15) of each wheel driving unit (12) with respect to the transmission (14) of the latter, is arranged on the rapidly revolving side of the latter.

2. The straddle carrier according to Claim 1, wherein the braking device (15) of each wheel driving unit (12) is driven electrohydraulically.

3. The straddle carrier according to Claim 1, wherein the braking device of each wheel driving unit (12) is driven electrically.

4. The straddle carrier according to any one of the Claims 1 to 3, wherein the braking device (15) of each wheel driving unit (12) is embodied as air-cooled disc brake (15) with a brake disc (17) with internal ventilation that can be preferentially produced in a large vehicle series.

5. The straddle carrier according to any one of the Claims 1 to 4, wherein the braking device (15) of each wheel driving unit (12) preferentially comprises two brake calipers (18, 19) that can be preferentially produced in a large vehicle series.

6. The straddle carrier according to any one of the Claims 1 to 5, wherein the braking device (15) of each wheel driving unit (12) is arranged in a wheel carrier (21) holding the wheel driving unit (12) with the wheel (11), which is designed in closed box design.

7. The straddle carrier according to Claim 5 or 6, wherein in the brake calipers (18, 19) of the braking device (15) of each wheel driving unit (12) an electric holding brake (20) each is integrated.

8. The straddle carrier according to Claim 7, wherein the electric holding brakes (20) can be supplied with electric energy by means of an electric energy storage unit, preferentially a battery.

9. The straddle carrier according to Claim 5 or 6, wherein in the brake calipers (18, 19) of the braking device (15) of each wheel driving unit (12), a hydraulic holding brake each is integrated.

10. The straddle carrier according to Claim 5 or 6, wherein in the brake calipers (18, 19) of the braking device (15) of each wheel driving unit (12) a pneumatic holding brake each is integrated.

11. The straddle carrier according to any one of the Claims 5 to 10, wherein the brake calipers (18, 19) of the braking device (15) of each wheel driving unit (12) can be supplied from a hydraulic unit via a pressure storage unit activated by means of proportional pressure valves.

12. The straddle carrier according to any one of the Claims 1 to 11, wherein a brake pedal generating the braking power of the braking devices (15) of the wheel driving units (12) is embodied as electric brake pedal with brake force simulator.

13. The straddle carrier according to Claim 12, wherein in a brake system comprising the brake pedal and the braking devices (15) assigned to the wheel driving units (12) an ABS/EPS function unit is integrated.

14. The straddle carrier according to any one of the Claims 1 to 13, wherein the motor (13) of each wheel driving unit (12) is embodied as drive (13) with high torques and low rotational speeds.

15. The straddle carrier according to Claim 14, wherein the motor (13) of each wheel driving unit (12) is embodied as electric torque motor (13).

16. The straddle carrier according to Claim 15, wherein the electric torque motor (13) of each wheel driving unit (12) has a rotational speed range of 0 to approximately 1,500 rpm.

17. The straddle carrier according to Claim 15 or 16, wherein the electric torque motor (13) of each wheel driving unit (12) is embodied force-cooling free and can be cooled on its motor cover (16) through the internal ventilation of the brake disc (17) of the braking device (15).

18. The straddle carrier according to any one of the Claims 15 to 17, wherein the electric torque motor (13) of each wheel driving unit (12) is embodied angle sensor-free.

19. The straddle carrier according to any one of the Claims 1 to 18, wherein a housing receiving the motor (13) comprises a preferentially moulded-on axle tube for the transmission (14) of the wheel driving unit (12).

20. The straddle carrier according to any one of the Claims 1 to 19, wherein the housing (14) of each wheel driving unit (12) is embodied as single-stage transmission with a transmission ratio of i = 4 to 8 without forced cooling.

21. The straddle carrier according to any one of the Claims 1 to 20, wherein the transmission (14) is embodied as planetary gear set (14).

22. The straddle carrier according to any one of the Claims 1 to 21, wherein the transmission (14) comprises a vibration sensor for damage sensing.

## Revendications

1. Chariot cavalier pour utilisation dans un terminal de conteneurs et à des fins de transport générales avec un châssis de cadre (2), un moyen de logement de charge (4), de préférence un palonnier de levage ou palonnier de levage supérieur, qui est suspendu entre le châssis de cadre (2) et peut être verrouillé avec une charge, de préférence un conteneur (7), des treuils de levage (8) au moyen desquels le moyen de logement de charge (4) peut être déplacé verticalement, et des mécanismes de déplacement (3) qui sont disposés sur la zone inférieure du châssis de cadre (2) et comportent respectivement une pluralité de roues (11) disposées en rangée, auxquelles sont attribués respectivement une unité d'entraînement de roue (12) avec un moteur (13), une transmission (14) et un dispositif de freinage (15), **caractérisé en ce que** le dispositif de freinage (15) de chaque unité d'entraînement de roue (12) est disposé eu égard à la transmission (14) de celle-ci sur son côté tournant rapidement.

2. Chariot cavalier selon la revendication 1, pour lequel le dispositif de freinage (15) de chaque unité d'entraînement de roue (12) est entraîné électro-hydrauliquement.

3. Chariot cavalier selon la revendication 1, pour lequel le dispositif de freinage de chaque unité d'entraînement de roue (12) est entraîné" électriquement.

4. Chariot cavalier selon l'une quelconque des revendications 1 à 3, pour lequel le dispositif de freinage (15) de chaque unité d'entraînement de roue (12) est constitué comme frein à disque refroidi par air (15) avec un disque de frein (17) avec ventilation interne, pouvant être fabriqué de préférence dans une grande série de véhicules.

5. Chariot cavalier selon l'une quelconque des revendications 1 à 4, pour lequel le dispositif de freinage (15) de chaque unité d'entraînement de roue (12) comporte de préférence deux étriers de frein (18, 19) pouvant être fabriqués de préférence dans une grande série de véhicules.

6. Chariot cavalier selon l'une quelconque des revendications 1 à 5, pour lequel le dispositif de freinage (15) de chaque unité d'entraînement de roue (12) est disposé dans un support de roue (21) retenant l'unité d'entraînement de roue (12) avec la roue (11), qui est constitué dans un mode de construction en caisson fermé.

7. Chariot cavalier selon la revendication 5 ou 6, pour lequel un frein d'arrêt électrique (20) est respectivement intégré dans les étriers de frein (18, 19) du dispositif de freinage (15) de chaque unité d'entraînement de roue (12).

8. Chariot cavalier selon la revendication 7, pour lequel les freins d'arrêt électriques (20) peuvent être alimentés en énergie électrique au moyen d'un accumulateur d'énergie électrique, de préférence une batterie.

9. Chariot cavalier selon la revendication 5 ou 6, pour lequel un frein d'arrêt hydraulique est respectivement intégré dans les étriers de frein (18, 19) du dispositif de freinage (15) de chaque unité d'entraînement de roue (12).

10. Chariot cavalier selon la revendication 5 ou 6 pour lequel un frein d'arrêt pneumatique est respectivement intégré dans les étriers de frein (18, 19) du dispositif de freinage (15) de chaque unité d'entraînement de roue (12).

11. Chariot cavalier selon l'une quelconque des revendications 5 à 10, pour lequel les étriers de frein (18, 19) du dispositif de freinage (15) de chaque unité d'entraînement de roue (12) peuvent être alimentés par un groupe hydraulique par le biais d'un accumulateur de pression ou de soupapes de pression proportionnelle piloté par liquide de frein.

12. Chariot cavalier selon l'une quelconque des revendications 1 à 11, pour lequel une pédale de frein générant la force de freinage des dispositifs de freinage (15) des unités d'entraînement de roue (12) est constituée comme pédale de frein électrique avec simulateur de force de freinage.

13. Chariot cavalier selon la revendication 12, pour lequel une unité fonctionnelle ABS/EPS est intégrée dans un système de frein comportant la pédale de frein et les dispositifs de freinage (15) attribués aux unités d'entraînement de roue (12).

14. Chariot cavalier selon l'une quelconque des revendications 1 à 13, pour lequel le moteur (13) de chaque unité d'entraînement de roue (12) est constitué comme entraînement (13) avec des couples élevés et des régimes faibles.

15. Chariot cavalier selon la revendication 14, pour lequel le moteur (13) de chaque unité d'entraînement de roue (12) est constitué comme moteur-couple électrique (13).

16. Chariot cavalier selon la revendication 15, pour lequel le moteur-couple électrique (13) de chaque unité d'entraînement de roue (12) comporte une plage de nombre de tours de 0 à environ 1500tr/min.

17. Chariot cavalier selon la revendication 15 ou 16, pour lequel le moteur-couple électrique (13) de chaque unité d'entraînement de roue (12) est constitué sans refroidissement forcé et peut être refroidi sur son couvercle de moteur (16) par la ventilation interne du disque de frein (17) du dispositif de freinage (15).

18. Chariot cavalier selon l'une quelconque des revendications 15 à 17, pour lequel le moteur-couple électrique (13) de chaque unité d'entraînement de roue (12) est constitué sans capteur d'angle.

19. Chariot cavalier selon l'une quelconque des revendications 1 à 18, pour lequel un carter logeant le moteur (13) comporte un tube d'essieu de préférence moulé pour la transmission (14) de l'unité d'entraînement de roue (12).

20. Chariot cavalier selon l'une quelconque des revendications 1 à 19 pour lequel la transmission (14) de chaque unité d'entraînement de roue (12) est constituée sans refroidissement forcé en tant que transmission monoétagée avec un rapport de transmission de i = 4 à 8.

21. Chariot cavalier selon l'une quelconque des revendications 1 à 20, pour lequel la transmission (14) est constituée comme boîte épicycloïdale (14).

22. Chariot cavalier selon l'une quelconque des revendications 1 à 21, pour lequel la transmission (14) comporte un capteur de vibrations pour la saisie des dommages.
